(19) Europäisches Patentamt
European Patent Office
Office européen des brevets

(11) EP 3 691 918 B1

(12) FASCICULE DE BREVET EUROPEEN

(45) Date de publication et mention de la délivrance du brevet:
**04.08.2021 Bulletin 2021/31**

(21) Numéro de dépôt: **18796716.1**

(22) Date de dépôt: **03.10.2018**

(51) Int Cl.:
***C08L 15/00*** (2006.01) ***B60C 1/00*** (2006.01)
***C08L 21/00*** (2006.01)

(86) Numéro de dépôt international:
**PCT/FR2018/052435**

(87) Numéro de publication internationale:
**WO 2019/069019 (11.04.2019 Gazette 2019/15)**

(54) **COMPOSITIONS DE CAOUTCHOUC COMPRENANT UNE COMBINAISON SPÉCIFIQUE D'UN AGENT DE COUPLAGE ET D'UNE RÉSINE HYDROCARBONÉE**

KAUTSCHUKZUSAMMENSETZUNGEN MIT EINER SPEZIFISCHEN KOMBINATION AUS EINEM KUPPLUNGSMITTEL UND EINEM HARZ AUF KOHLENWASSERSTOFFBASIS

RUBBER COMPOSITIONS COMPRISING A SPECIFIC COMBINATION OF A COUPLING AGENT AND A HYDROCARBON-BASED RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2017 FR 1759290**

(43) Date de publication de la demande:
**12.08.2020 Bulletin 2020/33**

(73) Titulaire: **Compagnie Générale des Etablissements Michelin**
**63000 Clermont-Ferrand (FR)**

(72) Inventeurs:
- **LABRUNIE, Philippe**
**63040 Clermont-Ferrand Cedex 9 (FR)**
- **LONGCHAMBON, Karine**
**63040 Clermont-Ferrand Cedex 9 (FR)**
- **COPEY, Laurent**
**63040 Clermont-Ferrand Cedex 9 (FR)**

(74) Mandataire: **Bocchi, Brigitte**
**Manufacture Française des Pneumatiques Michelin**
**CBS/CORP/J/PI - F35 - Ladoux**
**23, place des Carmes - Déchaux**
**63040 Clermont-Ferrand Cedex 9 (FR)**

(56) Documents cités:
**WO-A1-2017/060634 JP-A- 2014 047 295**
**JP-A- 2015 174 991**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention est relative aux compositions de caoutchouc comprenant au moins une charge inorganique renforçante et une combinaison spécifique d'une résine hydrocarbonée et d'un agent de couplage de la charge inorganique avec l'élastomère ; ces compositions étant notamment destinées aux pneumatiques et plus particulièrement aux bandes de roulement de pneumatiques.

Depuis que les économies de carburant et la nécessité de protéger l'environnement sont devenues une priorité, il s'est avéré nécessaire de produire des pneumatiques ayant une résistance au roulement réduite, sans pénalisation des autres propriétés du pneumatique, en particulier sans réduire l'adhérence sur sol humide.

Or, il est bien connu de l'homme de l'art que l'amélioration d'une performance pour des pneumatiques est souvent obtenue au détriment de ses autres performances.

Par exemple, une façon de conférer au pneumatique une adhérence élevée sur sol mouillée est d'utiliser, pour la bande de roulement, une composition de caoutchouc qui présente un bon potentiel hystérétique. Or, en même temps, cette bande de roulement doit avoir une contribution à la résistance au roulement la plus faible possible pour limiter les pertes d'énergie liées au roulement ; c'est-à-dire qu'elle doit être la moins hystérique possible.

L'amélioration de la résistance au roulement a été rendue possible grâce à l'emploi de nouvelles compositions de caoutchouc renforcées de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement. Ces silices spécifiques du type hautement dispersibles ont typiquement une surface spécifique BET comprise dans un domaine allant de 100 à 250 $m^2$/g.

Afin de faciliter la dispersion des charges inorganiques renforçantes, il est connu d'utiliser des agents de couplage, encore appelé agent de liaison, qui ont pour fonction d'assurer des connexions ou des liaisons entre la surface des particules de charges inorganique et l'élastomère des compositions de caoutchouc, tout en facilitant la dispersion de cette charge inorganique au sein de la matrice élastomérique.

On rappelle ici que par « agent de couplage » (charge inorganique/élastomère), on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée « Y-W-X », dans laquelle: Y représente un groupe fonctionnel (fonction « Y ») qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice); X représente un groupe fonctionnel (fonction « X ») capable de se lier physiquement et/ou chimiquement à l'élastomère diénique, par exemple par l'intermédiaire d'un atome de soufre; W représente un groupe divalent permettant de relier Y et X. Les agents de couplage ne doivent en particulier pas être confondus avec de simples agents de recouvrement de charge inorganique qui, de manière connue, peuvent comporter la fonction Y active vis-à-vis de la charge inorganique renforçante mais sont dépourvus de la fonction X active vis-à-vis de l'élastomère diénique.

Parmi les nombreux agents de couplage charge/élastomère existants, les mercaptosilanes s'avèrent particulièrement intéressants. Cependant étant donné leur très grande réactivité, on utilise généralement des mercaptosilanes bloqués. On rappelle ici que les mercaptosilanes bloqués, de manière bien connue de l'homme du métier, sont des précurseurs de silanes susceptibles de former des mercaptosilanes au cours de la préparation des compositions de caoutchouc (voir par exemple US 2002/0115767 A1 ou la demande internationale WO 02/48256). Ces molécules ont un groupement bloquant à la place de l'atome d'hydrogène du mercaptosilane correspondant. Les mercaptosilanes bloqués sont susceptibles d'être débloqués par remplacement du groupement bloquant par un atome d'hydrogène, au cours du mélangeage et de la cuisson, pour conduire à la formation d'un mercaptosilane plus réactif, défini comme un silane dont la structure moléculaire contient au moins un groupement thiol (-SH) (mercapto-) lié à un atome de carbone et au moins un atome de silicium. Ces agents de couplage mercaptosilanes bloqués sont ainsi généralement utilisés en présence d'activateur de mercaptosilane bloqué dont le rôle est d'amorcer, d'accélérer ou d'amplifier l'activité du mercaptosilane bloqué, comme le précise notamment le brevet US7,122,590. Un tel activateur ou « agent débloquant » pour les compositions de caoutchouc pour pneumatique, est généralement constitué par une guanidine, en particulier la N,N'- diphenylguanidine (DPG).

Bien qu'il ait été montré que l'utilisation d'agents de couplage mercaptosilanes bloqués présente l'avantage d'améliorer la résistance au roulement lorsqu'ils sont utilisés dans des compositions de caoutchouc, ils présentent l'inconvénient de détériorer l'adhérence sur sol mouillé.

Ainsi, il subsiste toujours le besoin d'améliorer la performance de résistance au roulement pour des compositions de caoutchouc, notamment destinées à des pneumatiques, sans pénalisation de la performance adhérence sur sol mouillé.

Le but de la présente invention est de répondre à ce besoin.

La demanderesse a découvert de façon surprenante qu'une combinaison spécifique d'un agent de couplage mercaptosilane bloqué et d'une résine hydrocarbonée dans une composition de caoutchouc renforcée répond à ce besoin. En effet, les compositions de caoutchouc renforcées comprenant cette combinaison spécifique ont une résistance au roulement améliorée par rapport aux compositions de l'art antérieur sans que soit pénalisée l'adhérence sur sol mouillé.

En conséquence, un premier objet de la présente invention concerne une composition de caoutchouc à base d'au moins:

- un élastomère diénique;
- une charge inorganique renforçante;
- un agent de couplage de la charge inorganique renforçante avec l'élastomère diénique, ledit agent de couplage étant un mercaptosilane bloqué de formule générale (I)

$$(R^4O)_dR^3_{(3-d)} - Si - Z - S - C (= O) - R^5 \qquad (I)$$

dans laquelle :

- le radical $R^3$ est choisi parmi les alkyles, linéaires ou ramifiés, en C1-C18, les cycloalkyles en C3-C8 et les aryles en C6-C10 ;
- le radical $R^4$ est choisi parmi un atome d'hydrogène, les alkyles, linéaires ou ramifiés, en C1-C18, les cycloalkyles en C3-C8 ou les aryles en C6-C10;
- le radical $R^5$ est choisi parmi un atome d'hydrogène, les alkyles, linéaires ou ramifiés en C1-C18, les cycloalkyles en C3-C8, les aryles en C6-C10 et les alkoxyalkyles, linéaires ou ramifiés, en C2-C8 ;
- le symbole Z représente un groupe de liaison divalent comportant de 1 à 18 atomes de carbone ;
- d est un nombre entier égal 1, 2 ou 3 ;

- une résine hydrocarbonée composée majoritairement de monomères choisis dans le groupe constitué par le cyclopentadiène, le dicyclopentadiène, le méthylcyclopentadiène et les mélanges de ces derniers, et
- un système de réticulation.

Un second objet de la présente invention concerne un article semi-fini pour pneumatique comprenant au moins une composition telle que définie ci-dessus. Plus préférentiellement, cet article semi-fini pour pneumatique est une bande de roulement.

Un troisième objet de la présente invention concerne un pneumatique comprenant au moins une composition telle que définie ci-dessus.

## 1 - METHODE DE MESURE UTILISEES.

### 1.1 - Mesure de la température de transition vitreuse Tg

Toutes les valeurs de température de transition vitreuse Tg sont mesurées de manière connue par DSC (Differential Scanning Calorimetry) selon la norme ASTM D3418 de 1999.

### 1.2 - Mesure du point de ramollissement des résines

Le point de ramollissement (« softening point ») d'une résine est mesuré selon la norme ISO 4625 (Méthode « Ring and Ball »).

### 1.3 - Mesure de la Mn, Mw et Ip des résines hydrocarbonées

La macrostructure (Mw, Mn, Ip et Mz) de la résine hydrocarbonée est déterminée par chromatographie d'exclusion stérique (SEC) sur la base des normes ISO 16014 (*Determination of average molecular mass and molecular mass distribution of polymers using size exclusion chromatography*), ASTM D5296 (*Molecular Weight Averages and molecular weight distribution of polystyrene by High performance size exclusion chromatography*), et DIN 55672 (chromatographie d'exclusion stérique).

Pour ces mesures, l'échantillon de résine est solubilisé dans du tétrahydrofurane non anti-oxydé jusqu'à une concentration de 1,5 g/l. La solution est filtrée avec un filtre téflon de porosité de 0,45 $\mu$m, en utilisant par exemple une seringue à usage unique montée d'un filtre. Un volume de 100 $\mu$l est injecté à travers un jeu de colonnes de chromatographie d'exclusion stérique. La phase mobile est éluée avec un débit de 1 ml/min. Les colonnes sont thermostatées

dans un four à 35°C. La détection est assurée par un réfractomètre thermostaté à 35°C. La phase stationnaire des colonnes est à base d'un gel de polystyrène divinylbenzène à porosité maîtrisée. Les chaînes polymères sont séparées selon la taille qu'elles occupent quand elles sont solubilisées dans le solvant: plus elles occupent un volume important, moins les pores des colonnes leur sont accessibles et plus leur temps d'élution est faible.

Une courbe d'étalonnage de Moore reliant le logarithme de la masse molaire (logM) au temps d'élution (te) est préalablement réalisée avec des étalons polystyrène, et modélisée par un polynôme d'ordre 3 : Log (masse molaire de polystyrène) = a + b te + c te2 + d te3.

Pour la courbe d'étalonnage on utilise des étalons de polystyrène à distributions moléculaires étroites (indice de polymolécularité, Ip, inférieur ou égal à 1,1). Le domaine de masses molaires de ces étalons s'étend de 160 à environ 70 000 g/mol. Ces étalons peuvent être rassemblés par « familles » de 4 ou 5 étalons ayant un incrément d'environ 0,55 en logM entre chaque.

On peut utiliser des kits étalons certifiés (ISO 13885 et DIN 55672 comme par exemple les kits de vials de la société PSS (polymer standard service, référence PSS-pskitr11-3), ainsi qu'un PS étalon supplémentaire de Mp = 162 g/mol (Interchim, référence 178952). Ces kits se présentent sous la forme de 3 vials contenant chacun une famille de polystyrène étalons dans des quantités adaptées :

- Vial noir : Mp = 1 220, 4 850, 15 500 et 67 500 g/mol,.
- Vial bleu : Mp = 376, 3 470, 10 400, 46 000 g/mol,
- Vial jaune : Mp = 266, 1 920, 7 200, 28 000 g/mol,
- PS162 : Mp = 162 g/mol,

Les masses molaires moyennes en nombre (Mn), en masse (Mw), la masse moyenne (Mz), et la polydispersité (Ip) de la résine analysée sont calculées à partir de cette courbe d'étalonnage. C'est pourquoi, on parle de masses molaires relatives à un étalonnage polystyrène.

Pour le calcul des masses moyennes et de l'indice de polydispersité, on définit sur le chromatogramme correspondant à l'injection de l'échantillon les bornes d'intégration de l'élution du produit. On « découpe » le signal réfractométrique défini entre les 2 bornes d'intégration toutes les secondes. On relève pour chacune des « découpes élémentaires », le temps d'élution ti et l'aire du signal du détecteur Ai.

On rappelle ici que : Ip = Mw/Mn avec Mw masse moléculaire moyenne en poids, et Mn masse moléculaire en nombre. On rappelle également que les masses Mw, Mn et Mz sont des masses moyennes calculées d'après les formules ci-dessous :

$$Mz = \frac{\sum Ai \ \times Mi^2}{\sum Ai \ \times Mi}$$

$$Mn = \frac{\sum Ai}{\sum \frac{Ai}{Mi}}$$

$$Mw = \frac{\sum Ai \ \times Mi}{\sum Ai}$$

dans lesquelles Ai est l'amplitude du signal du détecteur réfractométrie correspondant à la masse Mi et au temps d'élution ti.

Le matériel utilisé pour la mesure de SEC est une chaîne de chromatographie en phase liquide par exemple la chaîne Alliance 2690 de WATERS comprenant une pompe, un dégazeur et un injecteur ; un réfractomètre différentiel (par exemple le réfractomètre 2410 de WATERS), un logiciel d'acquisition et de traitement des données, par exemple le logiciel EMPOWER de WATERS, un four à colonnes, par exemple le WATERS «columns Heater Module» et 4 colonnes montées en série dans l'ordre suivant :

| Numéro | Marque | Domaine de masses molaires (g/mol) | Longueur (mm) | Diamètre interne (nm) | Taille des particules (μm) | Désignation commerciale | Référence à titre indicatif |
|---|---|---|---|---|---|---|---|
| Colonnes 1 et 2 | Polymer Laboratories | 200-400000 | 300 | 7,5 | 5 | MIXED-D | PL1110-6504 |
| Colonnes 3 et 4 | Polymer Laboratories | 200-30000 | 300 | 7,5 | 3 | MIXED-E | PL1110-6300 |

### 1.4 - Mesure du taux de protons dans une résine

Le taux de protons aromatiques et le taux de protons éthyléniques sont mesurés par RMN $^1H$. Cette détermination est réalisée par rapport à l'ensemble des signaux détectés. Ainsi, les résultats obtenus sont exprimés en % d'aire de pic.

Les échantillons sont solubilisés dans le chloroforme deutéré ($CDCl_3$) à raison d'environ 10 mg de résine dans environ 1 mL de solvant. Les spectres sont acquis sur un spectromètre Avance 500 MHz Bruker équipé d'une sonde « large bande » BBO z-grad 5 mm Bruker. L'expérience RMN $^1H$ utilise une séquence simple impulsion 30° et un délai de répétition de 5 secondes entre chaque acquisition. 64 accumulations sont réalisées à température ambiante. Les déplacements chimiques sont calibrés par rapport à l'impureté protonée du chloroforme deutéré ; δppm $^1H$ à 7,20 ppm. Les signaux RMN $^1H$ des protons aromatiques sont situés entre 8,5 ppm et 6,2 ppm. Les protons éthyléniques quant à eux engendrent des signaux entre 6,2 ppm et 4,5 ppm. Enfin, les signaux correspondant aux protons aliphatiques sont situés entre 4,5 ppm et 0 ppm. Les aires de chaque catégorie de protons sont rapportées à la somme de ces aires pour ainsi donner une répartition en % d'aire de chaque catégorie de protons.

### 1.5 - Mesure de la surface spécifique BET et de la surface spécifique CTAB

La surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,2].

Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

### 1.6 - Détermination de la microstructure des élastomères par spectroscopie proche infrarouge (NIR)

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4-cis). Le principe de la méthode repose sur la loi de Beer-Lambert généralisée à un système multicomposants. La méthode étant indirecte, elle fait appel à un étalonnage multivarié [Vilmin, F.; Dussap, C; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 μm d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

### 1.7 - Propriétés dynamiques des compositions de caoutchouc (après cuisson)

Les propriétés dynamiques sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 $mm^2$ de section), soumis à une sollicitation sinusoïdale en cisaillement simple alterné, à la fréquence de 10 Hz, lors d'un balayage en température, sous une contrainte fixe de 0,7 MPa, on enregistre les valeurs de G* et tan δ observée à - 20°C (soient $G^*_{-20°C}$ et $\tan(\delta)_{-20°C}$).

On soumet également le même échantillon, à la température de 23°C, à un balayage en amplitude de déformation de 0,1% à 50% (cycle aller), puis de 50% à 0,1 % (cycle retour). Pour le cycle retour, on enregistre la valeur maximale du facteur de perte, notée tan(δ)max.

Les résultats $\tan(\delta)_{max}$ à 23°C sont indiqués en base 100 et sont obtenus de la manière suivante : on calcule en base 100 le résultat $\tan(\delta)_{max}$ à 23°C obtenu pour un échantillon à tester en attribuant la valeur arbitraire 100 au témoin :

Résultat $\tan(\delta)_{max}$ à 23°C (base 100) = (valeur de tan(δ)max à 23°C de l'échantillon à tester × 100) / (valeur de tan(δ) max à 23°C du témoin).

De cette façon, un résultat inférieur à 100 indique une diminution de l'hystérèse (ce qui est favorable pour la résistance au roulement).

On rappelle de manière connue de l'homme du métier que la valeur de tan(δ) observée à -20°C est représentative du potentiel d'adhérence sur sol mouillé ; plus la valeur de $\tan(\delta)_{-20°C}$ est élevée, meilleure est l'adhérence. On exprime

le résultat en base 100 par le calcul suivant : Une valeur arbitraire 100 est donnée à une composition témoin, un résultat supérieur à 100 indiquant une augmentation de la valeur de tan(δ)$_{-20°C}$, correspondant donc à une amélioration de la performance d'adhérence sur sol mouillé.

$$\text{Résultat } \tan(\delta)_{-20°C} \text{ (base 100)} = (\text{valeur de } \tan(\delta)_{-20°C} \text{ de l'échantillon à tester} \times 100) / (\text{valeur } \tan(\delta)_{-20°C} \text{ du témoin}).$$

Les résultats $G^*_{-20°C}$ sont indiqués en base 100 et sont obtenus de la manière suivante : on calcule en base 100 le résultat $G^*_{-20°C}$ obtenu pour un échantillon à tester en attribuant la valeur arbitraire 100 au témoin :

$$\text{Résultat } G^*_{-20°C} \text{ (base 100)} = (\text{valeur de } G^*_{-20°C} \text{ de l'échantillon à tester} \times 100) / (\text{valeur de } G^*_{-20°C} \text{ du témoin}).$$

De cette façon, un résultat inférieur à 100 indique une diminution de $G^*_{-20°C}$ (ce qui est favorable pour d'adhérence sur sol enneigé).

## 2 - DESCRIPTION DETAILLEE DE L'INVENTION

L'invention ainsi que ses avantages seront aisément compris à la lumière de la description et des exemples de réalisation.

Un premier objet de la présente invention concerne une composition de caoutchouc à base d'au moins:

- un élastomère diénique;
- une charge inorganique renforçante;
- un agent de couplage de la charge inorganique renforçante avec l'élastomère diénique, ledit agent de couplage étant un mercaptosilane bloqué de formule générale (I)

$$(R^4O)_dR^3_{(3-d)}\text{-Si-Z-S-C(=O)-}R^5 \qquad \text{(I)}$$

dans laquelle :

- le radical $R^3$ est choisi parmi les alkyles, linéaires ou ramifiés, en C1-C18, les cycloalkyles en C3-C8 et les aryles en C6-C10 ;
- le radical $R^4$ est choisi parmi un atome d'hydrogène, les alkyles, linéaires ou ramifiés, en C1-C18, les cycloalkyles en C3-C8 ou les aryles en C6-C10;
- le radical $R^5$ est choisi parmi un atome d'hydrogène, les alkyles, linéaires ou ramifiés en C1-C18, les cycloalkyles en C3-C8, les aryles en C6-C10 et les alkoxyalkyles, linéaires ou ramifiés, en C2-C8 ;
- le symbole Z représente un groupe de liaison divalent comportant de 1 à 18 atomes de carbone ;
- d est un nombre entier égal 1, 2 ou 3;

  - une résine hydrocarbonée composée majoritairement de monomères choisis dans le groupe constitué par le cyclopentadiène, le dicyclopentadiène, le méthylcyclopentadiène et les mélanges de ces derniers ; et
  - un système de réticulation.

Par l'expression « composition à base de », il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition.

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

Dans la présente demande, on entend « pce » (usuellement « phr » en anglais) la partie en poids d'un constituant pour cent parties en poids d'élastomères.

Dans le cadre de l'invention, les produits comprenant du carbone mentionnés dans la description peuvent être

d'origine fossile ou biosourcée. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

## 2.1 - Constituants de la composition de caoutchouc

*Elastomère diénique*

Comme mentionné précédemment, les compositions conformes à l'invention comprennent au moins un élastomère diénique.

Par élastomère (ou « caoutchouc », les deux termes étant considérés comme synonymes) du type « diénique », on rappelle ici que doit être compris de manière connue un (on entend un ou plusieurs) élastomère issu au moins en partie (c'est-à-dire un homopolymère ou un copolymère) de monomère(s) diène(s) (i.e., porteur(s) de deux doubles liaisons carbone-carbone, conjuguées ou non).

Les élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux molaire de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux molaire de motifs d'origine diénique faible ou très faible, toujours inférieur à 15% (% en moles)). Dans la catégorie des élastomères diéniques « essentiellement insaturés », on entend en particulier par élastomère diénique « fortement insaturé » un élastomère diénique ayant un taux molaire de motifs d'origine diénique (diènes conjugués) qui est supérieur à 50% (% en moles).

Ces définitions étant données, on entend plus particulièrement par élastomère diénique susceptible d'être utilisé dans les compositions de caoutchouc conformes à l'invention:

(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère, notamment diénique, l'homme du métier comprendra que la présente invention est de préférence mise en œuvre avec des élastomères diéniques essentiellement insaturés, en particulier du type (a) ou (b) ci-dessus.

Dans le cas de copolymères (b), ceux-ci peuvent contenir de 20 % à 99 % en poids d'unités diéniques et de 1 % et 80 % en poids d'unités vinylaromatiques.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Préférentiellement, le ou les élastomères diéniques de la composition selon l'invention peuvent être choisis dans le groupe des élastomères diéniques constitué par les polybutadiènes (en abrégé « BR »), les polyisoprènes de synthèse (en abrégé « IR »), le caoutchouc naturel (en abrégé « NR »), les copolymères de butadiène, les copolymères d'isoprène et les mélanges de ces élastomères.

De tels copolymères sont plus préférentiellement choisis dans le groupe constitué par les copolymères de butadiène-styrène (en abrégé « SBR ») que ces derniers soient préparés par polymérisation en émulsion (« ESBR ») ou par polymérisation en solution (« SSBR »), les copolymères d'isoprène-butadiène (en abrégé « BIR »), les copolymères d'isoprène-styrène (en abrégé « SIR »), les copolymères d'isoprène-butadiène-styrène (en abrégé « SBIR »).

Plus préférentiellement, le ou les élastomères diéniques de la composition selon l'invention peuvent être choisis dans le groupe des élastomères diéniques constitué par les polybutadiènes, les copolymères de butadiène-styrène, les

copolymères d'isoprène-butadiène, les copolymères d'isoprène-styrène, les copolymères d'isoprène-butadiène-styrène et les mélanges de ces élastomères.

Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Ces élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Selon un mode réalisation préféré, l'élastomère est un élastomère diénique fonctionnalisé.

De préference, l'élastomère diénique fonctionnalisé est choisis dans le groupe des élastomères diéniques constitué par les polybutadiènes, les polyisoprènes de synthèse, les copolymères de butadiène, les copolymères d'isoprène et les mélanges de ces élastomères. Plus préférentiellement encore l'élastomère fonctionnalisé est un copolymère de butadiène-styrène.

De préference, l'élastomère diénique fonctionnalisé a une température de transition vitreuse Tg inférieure ou égale à -40°C, de préference comprise dans un domaine allant de -110°C à -40°C, plus préférentiellement de -110°C à -60°C, encore plus préférentiellement de -110°C à -80°C.

On entend par « élastomère diénique fonctionnalisé » un élastomère diénique synthétique qui comporte au moins un groupement chimique comprenant un ou plusieurs hétéroatomes, tels que par exemple un atome de soufre S, un atome d'azote N, un atome d'oxygène O, un atome de silicium Si, un atome d'étain Sn. Dans le cadre de la présente description ; ce groupement chimique est aussi appelé « fonction ». Les deux termes sont utilisés indifféremment.

Ce groupement chimique peut se situer en bout de chaîne, c'est-à-dire à une extrémité de la chaîne élastomère principale linéaire. On dira alors que l'élastomère diénique est fonctionnalisé « en bout de chaîne » ou « en extrémité de chaîne ». C'est généralement un élastomère obtenu par réaction d'un élastomère vivant sur un agent de fonctionnalisation, c'est-à-dire toute molécule au moins mono fonctionnelle, la fonction étant tout type de groupement chimique connu par l'homme de l'art pour réagir avec un bout de chaîne vivant.

Ce groupement chimique peut se situer dans la chaîne élastomère principale linéaire. On dira alors que l'élastomère diénique est couplé ou encore fonctionnalisé « en milieu de chaîne », par opposition à la position « en bout de chaîne » et bien que le groupement ne se situe pas précisément au milieu de la chaîne élastomère. C'est généralement un élastomère obtenu par réaction de deux chaînes de l'élastomère vivant sur un agent de couplage, c'est-à-dire toute molécule au moins difonctionnelle, la fonction étant tout type de groupement chimique connu par l'homme de l'art pour réagir avec un bout de chaîne vivant.

Ce groupement peut être central auquel n chaînes élastomères (n>2) sont liées formant une structure en étoile de l'élastomère. On dira alors que l'élastomère diénique est étoilé. C'est généralement un élastomère obtenu par réaction de n chaînes de l'élastomère vivant sur un agent d'étoilage, c'est-à-dire toute molécule multifonctionnelle, la fonction étant tout type de groupement chimique connu par l'homme de l'art pour réagir avec un bout de chaîne vivant.

L'homme du métier comprendra qu'une réaction de fonctionnalisation avec un agent comprenant plus d'une fonction réactive vis-à-vis de l'élastomère vivant, résulte en un mélange d'espèces fonctionnalisées en bout de chaîne et en milieu de chaîne, constituant les chaînes linéaires de l'élastomère diénique fonctionnalisé, ainsi que le cas échéant d'espèces étoilées. Selon les conditions opératoires, principalement le rapport molaire de l'agent de fonctionnalisation aux chaînes vivantes, certaines espèces sont majoritaires dans le mélange.

Préférentiellement, l'élastomère diénique fonctionnalisé comprend au moins une fonction polaire comprenant au moins un atome d'oxygène.

Préférentiellement, la fonction polaire peut être choisie dans le groupe constitué par le silanol, les alkoxysilanes, alkoxysilanes porteurs d'un groupement amine, l'époxyde, les éthers, les esters, les acides carboxyliques et l'hydroxyle. La fonction polaire améliore notamment l'interaction entre la charge renforçante inorganique et l'élastomère. De tels élastomères fonctionnalisés sont connus en soi et sont décrits notamment dans les documents suivants FR2740778, US6013718, WO2008/141702, FR2765882, WO01/92402, WO2004/09686, EP1127909, US6503973, WO2009/000750 et WO 2009/000752.

Dans un mode de réalisation préférée, l'élastomère diénique fonctionnalisé est un élastomère diénique comportant une fonction polaire qui est un silanol.

De préférence, l'élastomère diénique fonctionnalisé comprend en une extrémité de sa chaîne principale une fonction silanol ou un groupement polysiloxane ayant une extrémité silanol de formule $-(SiR_1R_2-O-)_mH$ avec m représentant un nombre entier de valeur allant de 3 à 8, de préférence 3, $R_1$ et $R_2$, identiques ou différents, représentent un radical alkyle de 1 à 10 atomes de carbone, de préférence un radicale alkyle ayant 1 à 4 atomes de carbone.

Ce type d'élastomère peut être obtenu selon les procédés décrits dans le document EP0778311 et plus particulièrement selon le procédé consistant, après une étape de polymérisation anionique, de fonctionnaliser l'élastomère vivant avec un agent de fonctionnalisation de type polysiloxane cyclique pour autant que le milieu réactionnel ne permette pas la polymérisation du cyclopolysiloxane. A titre de polysiloxanes cycliques, on peut citer ceux répondant à la formule

(III):

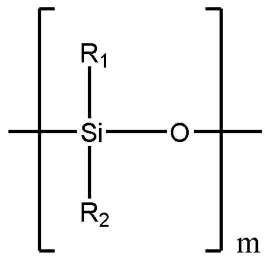

(III)

avec m représente un nombre entier de valeur allant de 3 à 8, de préférence 3, $R_1$ et $R_2$, identiques ou différents, représentent un radical alkyle de 1 à 10 atomes de carbone, de préférence un radicale alkyle ayant 1 à 4 atomes de carbone. Parmi ces composés on peut citer l'hexaméthylcyclotrisiloxane.

Dans un autre mode de réalisation préférée de l'invention, l'élastomère diénique fonctionnalisé comporte une fonction polaire qui est un alcoxysilane porteur ou non d'une autre fonction (ou porteur d'un autre groupement chimique, les expressions sont synonymes).

De préférence, cet élastomère diénique fonctionnalisé comprend au sein de sa chaîne principale au moins un groupe alcoxysilane lié à la chaîne élastomère par l'atome de silicium, et éventuellement porteur d'au moins une autre fonction.

Selon certaines variantes préférées, le groupe alcoxysilane (porteur ou non d'une autre fonction) se situe en une extrémité de la chaîne principale de l'élastomère.

Selon d'autres variantes préférées, le groupe alcoxysilane (porteur ou non d'une autre fonction) se situe dans la chaîne élastomère principale. L'atome de silicium de cette fonction lie les deux branches de la chaîne principale de l'élastomère diénique.

Le groupe alcoxysilane (porteur ou non d'une autre fonction) comprend un radical alcoxyle en $C_1$-$C_{10}$, éventuellement partiellement ou totalement hydrolysé en hydroxyle, voire en $C_1$-$C_8$, de préférence en $C_1$-$C_4$, et est plus préférentiellement méthoxy et éthoxy.

L'autre fonction est de préférence portée par le silicium du groupe alcoxysilane, directement ou par l'intermédiaire d'un groupe espaceur défini comme étant un atome ou un radical hydrocarboné divalent, linéaire ou ramifié, aliphatique en $C_1$-$C_{18}$, saturé ou non, cyclique ou non, ou un radical hydrocarboné divalent aromatique en $C_6$-$C_{18}$.

L'autre fonction est de préférence une fonction comprenant au moins un hétéroatome choisi parmi N, S, O, P. On peut, à titre d'exemple, citer parmi ces fonctions, les amines primaires, secondaires ou tertiaires, cycliques ou non, les isocyanates, les imines, les cyano, les thiols, les carboxylates, les époxydes, les phosphines primaires, secondaires ou tertiaires.

Ainsi, à titre de fonction amine secondaire ou tertiaire, on peut citer les amines substituées par des radicaux alkyle en $C_1$-$C_{10}$, de préférence alkyle en $C_1$-$C_4$, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements métylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole.

Ainsi, à titre de fonction carboxylate, on peut citer les acrylates ou les méthacrylates. Une telle fonction est de préférence un méthacrylate.

A titre de fonction époxyde, on peut citer les groupements époxy ou glycidyloxy.

A titre de fonction phosphine secondaire ou tertiaire, on peut citer les phosphines substituées par des radicaux alkyle en $C_1$-$C_{10}$, de préférence alkyle en $C_1$-$C_4$, plus préférentiellement un radical méthyle ou éthyle, ou alors la diphénylphosphine. Par exemple, conviennent les groupements métylphosphino-, diméthylphosphino-, éthylphosphino-, diéthylphosphino, éthylméthylphosphino- et diphénylphosphino-.

Préférentiellement, l'autre fonction est de préférence une amine tertiaire, plus préférentiellement un groupement diéthylamino- ou diméthylamino-.

Préférentiellement, l'élastomère diénique fonctionnalisé (notamment un SBR) peut comporter une fonction polaire qui est un alcoxysilane porteur ou non d'un groupement amine.

De préférence, cet élastomère diénique fonctionnalisé comprend au sein de sa chaîne principale au moins un groupe alcoxysilane lié à la chaîne élastomère par l'atome de silicium, et éventuellement porteur d'un groupement amine.

De préférence, ce groupe alcoxysilane peut être représenté par la formule (IV) :

$$(^*\text{-})_a Si(OR')_b R_c X \qquad (IV)$$

dans laquelle :

- *- représente la liaison à une chaîne élastomère ;
- le radical R représente un radical alkyle, substitué ou non substitué, en $C_1$-$C_{10}$, voire en $C_1$-$C_8$, de préférence un radical alkyle en $C_1$-$C_4$, plus préférentiellement méthyle et éthyle ;
- dans le ou les radicaux alcoxyle de formule -OR', éventuellement partiellement ou totalement hydrolysés en hydroxyle, R' représente un radical alkyle, substitué ou non substitué, étant en $C_1$-$C_{10}$, voire en $C_1$-$C_8$, de préférence un radical alkyle en $C_1$-$C_4$, plus préférentiellement méthyle et éthyle ;
- X représente un groupement incluant l'autre fonction;
- a vaut 1 ou 2, b vaut 1 ou 2, et c vaut 0 ou 1, sous réserve que a+b+c =3.

Plus préférentiellement, l'élastomère diénique fonctionnalisé est un élastomère diénique (notamment un SBR) comprend au sein de sa chaîne principale au moins un groupe alcoxysilane de formule (IV) dans laquelle :

- *- représente la liaison à une chaîne élastomère ;
- le radical R représente un radical alkyle, substitué ou non substitué, en $C_1$-$C_4$, plus préférentiellement méthyle et éthyle ;
- dans le ou les radicaux alcoxyle de formule -OR', éventuellement partiellement ou totalement hydrolysés en hydroxyle, R' représente un radical alkyle, substitué ou non substitué, en $C_1$-$C_4$, plus préférentiellement méthyle et éthyle ;
- X représente un groupement incluant l'autre fonction; de préférence une amine tertiaire ;
- a vaut 1 ou 2, b vaut 1 ou 2, et c vaut 0 ou 1, sous réserve que a+b+c =3.

Ce type d'élastomère est principalement obtenu par fonctionnalisation d'un élastomère vivant issu d'une polymérisation anionique. Il convient de préciser qu'il est connu de l'homme du métier que lorsqu'un élastomère est modifié par réaction d'un agent de fonctionnalisation sur l'élastomère vivant issu d'une étape de polymérisation anionique, on obtient un mélange d'espèces modifiées de cet élastomère dont la composition dépend des condition de la réaction de modification et notamment de la proportion de sites réactifs de l'agent de fonctionnalisation par rapport au nombre de chaînes élastomères vivantes. Ce mélange comprend des espèces fonctionnalisées en extrémité de chaîne, couplées, étoilées et/ou non fonctionnalisées.

Selon une variante particulièrement préférée, l'élastomère diénique modifié comprend à titre d'espèce majoritaire l'élastomère diénique fonctionnalisé en milieu de chaîne par un groupe alcoxysilane lié aux deux branches de l'élastomère diénique par l'intermédiaire de l'atome de silicium. Plus particulièrement encore, l'élastomère diénique fonctionnalisé en milieu de chaîne par un groupe alcoxysilane représente 70% en poids de l'élastomère diénique modifié. De préférence, cet élastomère diénique fonctionnalisé présente une température de transition vitreuse Tg inférieure ou égale à -40°C, de préférence comprise dans un domaine allant de -110°C à -40°C, plus préférentiellement de -110°C à -60°C, encore plus préférentiellement de -110°C à -80°C.

Les élastomères diéniques, qu'ils soient fonctionnalisés ou non, peuvent être utilisés en coupage (mélange) entre eux. Ainsi, les compositions de caoutchouc conformes à l'invention peuvent contenir un seul élastomère diénique, fonctionnalisé ou non, ou bien un mélange de plusieurs élastomères diéniques, fonctionnalisés ou non, ce ou ces élastomères diéniques pouvant être utilisés en association avec tout type d'élastomère synthétique autre que diénique, voire avec des polymères autres que des élastomères, par exemple des polymères thermoplastiques.

*Charge renforçante*

Les compositions de caoutchouc conforme à l'invention comprennent au moins une charge inorganique renforçante.

Par « charge inorganique renforçante », doit être entendu dans la présente demande, par définition, toute charge inorganique ou minérale (quelles que soient sa couleur et son origine naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites « HDS »), on citera par exemple les silices « Ultrasil 7000 » et « Ultrasil 7005 » de la société Evonik, les silices « Zeosil » 1165MP, 1135MP et 1115MP de la société Solvay, la silice « Hi-Sil EZ150G » de la société PPG, les silices « Zeopol » 8715, 8745 et 8755 de la Société Huber, les silices à haute surface spécifique telles que décrites dans la demande WO 03/016387.

De préférence, la charge inorganique renforçante comprend au moins une silice, plus préférentiellement est constitué de silice.

De préférence, la charge inorganique renforçante utilisée, en particulier s'il s'agit de silice, a une surface BET comprise entre 45 et 400 $m^2/g$, plus préférentiellement comprise entre 60 et 300 $m^2/g$. Les surfaces spécifiques BET et CTAB sont déterminées selon les méthodes de mesures décrites précédemment.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

De préférence, le taux de charge inorganique renforçante dans les compositions de caoutchouc conforme à l'invention est compris dans un domaine allant de 5 à 200 pce, plus préférentiellement de 40 à 160 pce.

Dans un mode de réalisation préféré, la composition de caoutchouc conforme à l'invention comprend en outre, une charge renforçante organique, de préférence du noir de carbone.

Conviennent comme charge renforçante organique, notamment les noirs de carbone ou les charges organiques de polyvinyle fonctionnalisé telles que décrites dans les demandes WO-A-2006/069792, WO-A-2006/069793, WO-A-2008/003434 et WO-A-2008/003435.

Dans ce mode de réalisation, la charge renforçante organique est du noir de carbone. Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Le noir de carbone lorsqu'il est présent, est utilisé préférentiellement à un taux compris dans un domaine allant de 0,1 à 10 pce, plus préférentiellement de 0,5 à 10 pce, notamment de 1 à 4 pce.

*Agent de couplage*

Comme mentionné précédemment, la composition de caoutchouc conforme à l'invention comprend au moins un agent de couplage de la charge inorganique renforçante avec l'élastomère, ledit agent de couplage étant un mercaptosilane bloqué de formule générale (I)

$$(R^4O)_dR^3_{(3-d)}\text{-Si-Z-S-C(=O)-}R^5 \qquad \text{(I)}$$

dans laquelle :

- le radical $R^3$ est choisi parmi les alkyles, linéaires ou ramifiés, en C1-C18, les cycloalkyles en C3-C8 et les aryles en C6-C10 ;
- le radical $R^4$ est choisi parmi un atome d'hydrogène, les alkyles, linéaires ou ramifiés, en C1-C18, les cycloalkyles en C3-C8 ou les aryles en C6-C10;
- le radical $R^5$ est choisi parmi un atome d'hydrogène, les alkyles, linéaires ou ramifiés en C1-C18, les cycloalkyles en C3-C8, les aryles en C6-C10 et les alkoxyalkyles, linéaires ou ramifiés, en C2-C8 ;
- le symbole Z représente un groupe de liaison divalent comportant de 1 à 18 atomes de carbone ;
- d est un nombre entier égal 1, 2 ou 3.

Préférentiellement, dans la formule générale (I), le radical $R^3$ est un alkyle, linéaire ou ramifié, en C1-C10.

Plus préférentiellement, dans la formule générale (I), le radical $R^3$ est choisi parmi le méthyle, l'éthyle, le propyle et l'isobutyle.

Préférentiellement, dans la formule générale (I), le radical $R^4$ est choisi parmi l'atome d'hydrogène et les alkyles, linéaires ou ramifiés, en C1-C18.

Plus préférentiellement, dans la formule générale (I), le radical $R^4$ est choisi parmi l'atome d'hydrogène, les alkyles, linéaires ou ramifiés en C1-C10.

Plus préférentiellement encore, dans la formule générale (I), le radical $R^4$ est choisi parmi l'atome d'hydrogène, méthyle, l'éthyle, le propyle et l'iso-butyle.

Le groupe Z représentant un groupe de liaison divalent peut être une chaîne hydrocarbonée éventuellement interrompue par un ou plusieurs hétéroatomes choisi en particulier parmi le soufre, l'azote et l'oxygène ; cette chaîne comportant de 1 à 18 atomes de carbone.

Préférentiellement, le groupe Z est choisi dans le groupe constitué par un alkylène, linéaire ou ramifié en C1-C18, un cycloalkylène saturé en C3-C8, un arylène en C6-C12.

Plus préférentiellement, le groupe Z est un alkylène, linéaire ou ramifié, en C1-C8.

Plus préférentiellement encore, le groupe Z est un alkylène en linéaire en C1-C4.

Plus préférentiellement encore, le groupe Z est choisi parmi le méthylène $-CH_2-$, l'éthylène $-CH_2CH_2-$, le propylène $-CH_2CH_2CH_2-$, plus préférentiellement le groupe Z est le propylène.

Préférentiellement, le radical $R^5$ est choisi parmi un atome d'hydrogène et les alkyles linéaires ou ramifiés en C1-C18.

Préférentiellement, le radical $R^5$ est un alkyle linéaire ou ramifié en C1-C10, plus préférentiellement encore un alkyle linéaire en C6-C8.

De préférence, le radical $R^5$ est choisi dans le groupe constitué par l'hexyle, l'heptyle et l'octyle, plus préférentiellement le radical $R^5$ est l'heptyle ($C_7H_{15}$-).

De préférence, d est un nombre entier égal à 3.

Dans un mode de réalisation préféré, le composé de formule (I) présente les caractéristiques suivantes :

- le radical $R^3$ est choisi parmi est choisi parmi les alkyles, linéaires ou ramifiés, en C1-C18, les cycloalkyles en C3-C8 et les aryles en C6-C10 ,
- le radical $R^4$ est choisi parmi un atome d'hydrogène, les alkyles, linéaires ou ramifiés, en C1-C18, les cycloalkyles en C3-C8 ou les aryles en C6-C10,
- le groupe Z est un alkylène, linéaire ou ramifié, en C1-C8, de préférence en $C_1$-$C_4$,
- le radical $R^5$ est un alkyle linéaire ou ramifié en C1-C10, plus préférentiellement encore un alkyle linéaire en C6-C8, et
- d est un nombre entier égal 1, 2 ou 3,

Dans un autre mode de réalisation préféré, le composé de formule (I) présente les caractéristiques suivantes :

- le radical $R^3$ est un alkyle, linéaire ou ramifié, en C1-C10,
- le radical $R^4$ est choisi parmi l'atome d'hydrogène, les alkyles, linéaires ou ramifiés en C1-C10,
- le groupe Z est choisi dans le groupe constitué par un alkylène, linéaire ou ramifié en C1-C18, de préférence C1-C8, plus préférentiellement le Z est choisi parmi le méthylène, l'éthylène, le propylène, plus préférentiellement encore le groupe Z est le propylène ,
- le radical $R^5$ est choisi dans le groupe constitué par un atome d'hydrogène et les alkyles linéaires ou ramifiés en C1-C18, de préférence $R^5$ est un alkyle linéaire ou ramifié en C1-C10, plus préférentiellement encore un alkyle linéaire en C6-C8, et
- d est un nombre entier égal 1, 2 ou 3

Dans un autre mode de réalisation préféré, le composé de formule (I) présente les caractéristiques suivantes :

- le radical $R^3$ est choisi parmi le méthyle, l'éthyle, le propyle et l'isobutyle,
- le radical $R^4$ est choisi parmi l'atome d'hydrogène, le méthyle, l'éthyle, le propyle et l'iso-butyle,
- le groupe Z est choisi parmi le méthylène $-CH_2-$, l'éthylène $-CH_2CH_2-$, le propylène $-CH_2CH_2CH_2-$ plus préférentiellement le groupe Z est le propylène,
- le radical $R^5$ est un alkyle linéaire en C6-C8, et
- d est un nombre entier égal 1, 2 ou 3, de préférence d est égal à 3.

Dans un autre mode de réalisation préféré, le composé de formule (I) présente les caractéristiques suivantes :

- le radical $R^3$ est choisi parmi le méthyle, l'éthyle, le propyle et l'isobutyle,
- le radical $R^4$ est choisi parmi le méthyle, l'éthyle, le propyle et l'iso-butyle,
- le groupe Z est choisi parmi le méthylène $-CH_2-$, l'éthylène $-CH_2CH_2-$, le propylène $-CH_2CH_2CH_2-$, plus préférentiellement le groupe Z est le propylène,
- $R^5$ est choisi dans le groupe constitué par l'hexyle, l'heptyle et l'octyle, de préférence est l'heptyle, et
- d est un nombre entier égal 1, 2 ou 3 ; de préférence d est égal à 3.

Les agents de couplage mercaptosilane bloqué utilisé dans les compositions conforme à l'invention ont été décrits, ainsi que leurs synthèses dans les documents WO99/09036, WO2010/072682, WO2010/072683 et WO203/087693.

A titre d'exemple préférentiel de mercaptosilane bloqué répondant à la formule (I), on citera tout particulièrement le composé de formule particulière (II) ci-après:

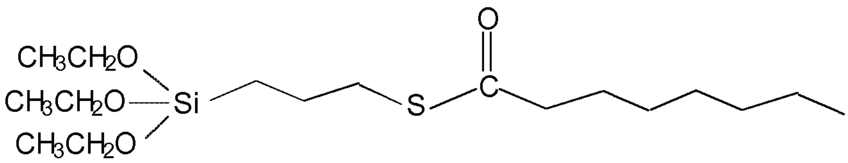

(II)

L'agent de couplage de formule (II) est disponible commercialement auprès de Momentive. Inc sous la référence commerciale «NXT».

Dans une variante de l'invention, l'agent de couplage utilisable dans les compositions de l'invention peut comprendre majoritairement un mercaptosilane bloqué de formule (I), y compris ces modes de réalisation préférés, tel que décrit ci-dessus et un deuxième agent de couplage, de structure chimique différente de ce mercaptosilane bloqué de formule (I). Ce deuxième agent de couplage peut être, par exemple, un silane polysulfuré.

Préférentiellement, dans ce mode de réalisation, l'agent de couplage utilisable dans les compositions de l'invention comprend au moins 70 % en poids un mercaptosilane bloqué de formule (I), y compris ces modes de réalisation préférés, tel que décrit ci-dessus par rapport au poids total des agents de couplage utilisés et un deuxième agent de couplage de structure chimique différente de ce mercaptosilane bloqué de formule (I); ce deuxième agent de couplage étant notamment présent à un taux d'au plus 30 % en poids par rapport au poids total des agents de couplage utilisés. Ce second agent de couplage peut être, par exemple, un silane polysulfuré.

Les silanes polysulfurés sont bien connus de l'homme du métier et sont utilisés comme agent de couplage d'une charge inorganique renforçante avec les élastomères dans des compositions de caoutchouc.

Les silanes polysulfurés peuvent être « symétriques » ou « asymétriques » selon leur structure particulière. De tels composés sont décrits par exemple dans les demandes WO03/002648 (ou US 2005/016651) et WO03/002649 (ou US 2005/016650).

Conviennent en particulier, sans que la définition ci-après soit limitative, des silanes polysulfurés dits « symétriques » répondant à la formule générale (V) suivante :

$$T\text{-}D\text{-}Sx\text{-}D\text{-}T \qquad (V)$$

dans laquelle:

- x est un entier de 2 à 8 (de préférence de 2 à 5) ;
- les symboles D, identiques ou différents, représente un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- les symboles T, identiques ou différents, répondent à l'une des formules ci-après:

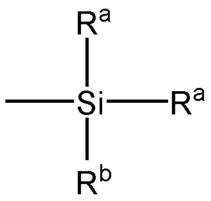 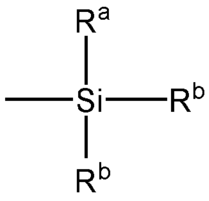 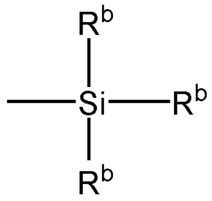

dans lesquelles:

- les radicaux $R^a$, substitués ou non substitués, identiques ou différents entre eux, représentent un alkyle en $C_1$-$C_{18}$, un cycloalkyle en $C_5$-$C_{18}$ ou un aryle en $C_6$-$C_{18}$ (de préférence un alkyle en $C_1$-$C_6$, un cyclohexyle ou un phényle, notamment un alkyle en $C_1$-$C_4$, plus particulièrement le méthyle et/ou l'éthyle).
- les radicaux $R^b$, substitués ou non substitués, identiques ou différents entre eux, représentent un groupe alkoxyle en $C_1$-$C_{18}$ ou un cycloalkoxyle en $C_5$-$C_{18}$ (de préférence un groupe choisi parmi les alkoxyles en $C_1$-$C_8$ et les cycloalkoxyles en $C_5$-$C_8$, plus préférentiellement encore un groupe choisi parmi les alkoxyles en $C_1$-$C_4$, en particulier le méthoxyle et l'éthoxyle).

Dans le cas d'un mélange d'alkoxysilanes polysulfurés répondant à la formule (V) ci-dessus, notamment des mélanges usuels disponibles commercialement, la valeur moyenne des « x » est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

Préférentiellement, l'agent de couplage utilisé dans les compositions de l'invention consiste en un mercaptosilane bloqué de formule (I), y compris ces modes de réalisation préférés tels que décrit ci-dessus ou en un mélange de un mercaptosilane bloqué de formule (I), y compris ces modes de réalisation préférés tels que décrit ci-dessus.

Dans les compositions de caoutchouc conforme à l'invention, le taux d'agent de couplage est préférentiellement compris dans un domaine allant de 1 à 20 pce, de 1 à 15 pce, plus préférentiellement de 3 à 14 pce.

Ces compositions de caoutchouc de l'invention peuvent optionnellement également contenir, en complément des agents de couplage précités, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

*Résine hydrocarbonée*

Les compositions de l'invention comprennent au moins une résine hydrocarbonée spécifique.

Cette résine hydrocarbonée est composée majoritairement de monomères choisis dans le groupe constitué par le cyclopentadiène, le dicyclopentadiène, le méthylcyclopentadiène et les mélanges de ces monomères. Cette résine peut être éventuellement hydrogénée.

La résine hydrocarbonée est de préférence une résine hydrocarbonée plastifiante.

De manière connue de l'homme du métier, la dénomination « résine plastifiante » est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles par nature dans les compositions d'élastomère(s) diénique(s) lorsqu'elles sont qualifiées en outre de « plastifiantes ». Elles ont été décrites par exemple dans l'ouvrage intitulé "Hydrocarbon Resins" de R. Mildenberg, M. Zander et G. Collin (New York,

VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

La demanderesse a découvert que parmi les résines hydrocarbonées plastifiantes, que les résines composées majoritairement de monomères choisis dans le groupe constitué par le cyclopentadiène, le dicyclopentadiène, le méthylcyclopentadiène et les mélanges de ces monomères utilisées en association avec l'agent de couplage silane organofonctionnel tel que décrit précédemment permettaient de façon étonnante d'obtenir des compositions de caoutchouc dont la résistance au roulement était améliorée sans que l'adhérence sur sol mouillé ne soit pénalisée. Ces compositions présentent également l'avantage d'avoir une adhérence sur sol enneigé améliorée.

Lorsqu'on on fait référence à un « monomère majoritaire » au sein d'une résine hydrocarbonée, on entend au sens de la présente invention que ce monomère est majoritaire parmi les monomères formant la résine, c'est-à-dire que c'est celui qui représente la plus grande fraction, en masse, parmi les monomères formant la résine. Ainsi, par exemple, une résine hydrocarbonée majoritairement composée de monomères cyclopentadiène est une résine dans laquelle les monomères cyclopentadiène représentent la plus grande quantité en masse, parmi tous les monomères composants cette résine hydrocarbonée. De la même manière, une résine hydrocarbonée composée majoritairement de monomères choisis dans le groupe constitué par le cyclopentadiène, le dicyclopentadiène, le méthylcyclopentadiène et les mélanges de ces monomères est une résine hydrocarbonée dans laquelle la somme des monomères choisis dans le groupe constitué par le cyclopentadiène, le dicyclopentadiène, le méthylcyclopentadiène et les mélanges de ces monomères représente le plus grand nombre en masse parmi tous les monomères composant ladite résine. Dit autrement, un « monomère majoritaire » est un monomère qui représente la fraction massique la plus grande dans la résine. Au contraire, un « monomère minoritaire » est un monomère qui ne représente pas la fraction massique la plus grande dans la résine.

Préférentiellement, la résine hydrocarbonée, éventuellement hydrogénée, comprend au moins 50 % en masse (> 50% en masse) de monomères choisis dans le groupe constitué par le cyclopentadiène, le dicyclopentadiène, le méthylcyclopentadiène et les mélanges de ces monomères par rapport à la masse totale de l'ensemble des monomères constituant ladite résine.

De préférence, la résine hydrocarbonée, éventuellement hydrogénée peut comprendre, en outre, à titre minoritaire, des monomères aromatiques et/ou des monomères aliphatiques.

Préférentiellement, la résine hydrocarbonée, éventuellement hydrogénée comprend au plus 50 % en masse (< 50 % en masse) de monomères aromatiques et/ou des monomères aliphatiques par rapport à la masse totale de l'ensemble des monomères constituant ladite résine, plus préférentiellement comprend au plus 40 % en masse (<40 % en masse) de monomères aromatiques et/ou des monomères aliphatiques.

A titre de monomères aromatiques, on peut citer par exemple des monomères choisis dans le groupe constitué par le styrène, l'alpha-méthylstyrène, l'ortho-, le méta-, le para-méthylstyrène, le vinyle-toluène, le para tertiobutylstyrène, les méthoxystyrène, les chlorostyrènes, le vinylmésitylène, le divinylbenzène, le vinylnapthalène, l'indène et tout monomère vinylaromatique issu d'une coupe C9 (ou plus généralement d'une coupe C8, C9 et C10). De préférence, le monomère vinylaromatique est le styrène ou un monomère vinylaromatique issu d'une coupe C9.

A titre de monomère aliphatiques, on peut citer par exemples des monomères choisis dans le groupe constitué par l'isoprène, le piperylène et l'amylène.

Selon un mode de réalisation préféré, la résine hydrocarbonée, éventuellement hydrogénée est choisie dans le groupe constitué par les résines d'homopolymères de cyclopentadiène, les résines d'homopolymères de dicyclopentadiène, les résines d'homopolymères de méthylcyclopentadiène et les mélanges de ces résines d'homopolymères précitées.

Egalement dans un mode de réalisation préféré, la résine hydrocarbonée, éventuellement hydrogénée peut être un mélange de résines des homopolymères précitées et de résines de copolymères précitées.

Selon un autre mode de réalisation également très préférentiel, la résine hydrocarbonée, éventuellement hydrogénée est choisie dans le groupe constitué par les résines majoritairement composées de monomères choisis dans le groupe constitué par le cyclopentadiène, le dicyclopentadiène, le méthylcyclopentadiène et les mélanges de ces monomères et minoritairement composées de monomère aromatiques.

Les résines hydrocarbonées, éventuellement hydrogénée, utilisables dans les compositions de l'invention sont souvent appelées résines CPD ou résines DCPD.

Les résines hydrocarbonées, éventuellement hydrogénée, sont obtenues par des procédés bien connus de l'homme du métier, tel que par exemple par polymérisation thermique (c'est-à-dire sans catalyseur de polymérisation).

De préférence, la résine hydrocarbonée, éventuellement hydrogénée, a une masse moléculaire moyenne en nombre Mn compris dans un domaine allant de 200 à 2000 g/mol, de préférence de 200 à 600 g/mol.

De préférence, la résine hydrocarbonée, éventuellement hydrogénée, a un indice de polymolécularité Ip inférieur ou égal à 2, de préférence inférieur ou égal 1,8, de préférence inférieure à 1,7.

De préférence, la résine hydrocarbonée, éventuellement hydrogénée, a une température de transition vitreuse Tg supérieure ou égale à 30°C, de préférence comprise dans un domaine allant de 30°C à 80°C.

De préférence, la résine hydrocarbonée, éventuellement hydrogénée, est également composée minoritairement de monomères aromatiques.

De préférence, le taux de protons aromatiques de la résine hydrocarbonée, éventuellement hydrogénée, est compris dans un domaine allant de 1 à 20 %, de préférence de 2 à 15%, plus préférentiellement encore de 2 à 10 %.

De préférence, la résine hydrocarbonée, éventuellement hydrogénée, a une masse moléculaire moyenne en nombre Mn compris dans un domaine allant de 200 à 600 g/mol et un indice de polymolécularité Ip inférieur ou égal à 2, de préférence inférieur ou égal 1,8, de préférence inférieure à 1,7.

Préférentiellement, le taux de résine hydrocarbonée, éventuellement hydrogénée, est compris dans un domaine allant de 15 pce à 150 pce, préférentiellement de 25 à 120 pce, plus préférentiellement de 30 à 115 pce. En effet, en dessous de 15 pce de la résine hydrocarbonée utile aux besoins de l'invention, l'effet de la résine ne serait pas suffisant et la composition pourrait présenter des problèmes d'adhérence, tandis qu'au-dessus de 150 pce, la composition pourrait présenter une difficulté de fabrication pour incorporer facilement toute ladite résine dans la composition.

La température de transition vitreuse, le point de ramollissement, la macrostructure (Mn, Mw, Ip) et taux de protons aromatiques de la résine hydrocarbonée, éventuellement hydrogénée, sont déterminés selon les méthodes décrites ci-dessus.

Les résines hydrocarbonées, éventuellement hydrogénées, composées majoritairement de monomères choisis dans le groupe constitué par le cyclopentadiène, le dicyclopentadiène, le méthylcyclopentadiène et les mélanges de ces monomères sont disponibles commercialement auprès de fournisseurs tels que Exxon Mobil notamment sous les références « Escorez E5600 », « Escorez E5415 », « Escorez E5320 », « PR-383 »...

*Système de réticulation*

Dans les compositions de l'invention, on peut utiliser tout type de système de réticulation connu de l'homme du métier pour les compositions de caoutchouc.

De préférence, le système de réticulation est un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels que l'oxyde de zinc, l'acide stéarique ou composés équivalents, des dérivés guanidiques (en particulier la diphénylguanidine).

Le soufre est utilisé à un taux préférentiel compris dans un domaine allant de 0,3 à 10 pce, plus préférentiellement de 0,3 à 5 pce, en particulier de 0,3 à 3 pce.

Le système de vulcanisation des compositions de l'invention peut également comprendre un ou plusieurs accélérateurs additionnels, par exemples des composés de la famille des thiurames, des dithiocarbamates de zinc, des sulfénamides, des guanidines ou des thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé « MBTS »), N-cyclohexyl-2-benzothiazyle sulfénamide (en abrégé « CBS »), N,N-dicyclohexyl-2-benzothiazyle sulfénamide (en abrégé « DCBS »), N-tert-butyl-2-benzothiazyle sulfénamide (en abrégé « TBBS »), N-tert-butyl-2-benzothiazyle sulfénimide (en abrégé « TBSI »), dibenzyldithiocarbamate de zinc (en abrégé « ZBEC ») disulfure de tétrabenzylthiurame ($TB_ZTD$) et les mélanges de ces composés. De préférence, on utilise un accélérateur primaire du type sulfénamide.

*Autres additifs possibles*

Les compositions de caoutchouc selon l'invention telle que décrites précédemment permettent à elles seules de répondre au problème technique posé, en particulier elles permettent d'avoir d'excellentes propriétés de résistance au roulement sans pénaliser l'adhérence sur sol mouillé. Toutefois, elles peuvent comporter optionnellement également tout ou partie des additifs usuels habituellement utilisés dans les compositions d'élastomères destinées notamment à la fabrication de produits semi-finis pour pneumatiques ou d'articles en caoutchouc, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique novolaque) ou des donneurs de méthylène (par exemple HMT ou H3M).

La composition selon l'invention peut également comporter un système plastifiant. Ce système plastifiant peut

être composé d'une résine hydrocarbonée de Tg supérieure à 20°C autre qu'une résine DCDP, en plus de la résine hydrocarbonée spécifique décrite précédemment, et/ou une huile plastifiante.

Bien entendu, les compositions conformes à l'invention peuvent être utilisées seules ou en coupage (i.e., en mélange) avec toute autre composition de caoutchouc utilisable pour la fabrication d'articles en caoutchouc notamment d'articles semi-finis pour pneumatiques ou des pneumatiques.

Il va de soi que l'invention concerne les compositions de caoutchouc précédemment décrites tant à l'état dit « cru » ou non réticulé (i.e., avant cuisson) qu'à l'état dit « cuit » ou réticulé, ou encore vulcanisé (i.e., après réticulation ou vulcanisation).

## 2.2 - Préparation des compositions de caoutchouc

Les compositions de caoutchouc conformes à l'invention sont fabriquées dans des mélangeurs appropriés, en utilisant deux phases de préparation successives bien connues de l'homme du métier: une première phase de travail ou malaxage thermomécanique (parfois qualifiée de phase « non-productive ») à haute température, jusqu'à une température maximale comprise entre 110°C et 200°C, de préférence entre 130°C et 180°C, suivie d'une deuxième phase de travail mécanique (parfois qualifiée de phase « productive ») à plus basse température, typiquement inférieure à 110°C, par exemple entre 60°C et 100°C, phase de finition au cours de laquelle est incorporé le système de réticulation ou vulcanisation. De telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, notamment la charge inorganique renforçante, l'agent de couplage silane organofonctionnel tel que décrit ci-dessus, la résine hydrocarbonée spécifique telle que décrite ci-dessus (et éventuellement les autres ingrédients à l'exception du système de réticulation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de réticulation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis pour pneumatiques. Ces produits peuvent ensuite être utilisés pour la fabrication de pneumatiques, selon les techniques connues de l'homme du métier.

La réticulation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

## 2.3 - Produits semi-fini pour pneumatique et pneumatique

Un autre objet de la présente invention concerne un article semi-fini pour pneumatique comprenant au moins une composition de caoutchouc conforme à l'invention et telle que définie ci-dessus. Les articles semi-finis de la présente invention présentent des propriétés améliorées de résistance au roulement sans que l'adhérence sur sol mouillé ne soit pénalisée. Avantageusement, ils présentent également une adhérence sur sol enneigé améliorée.

L'article semi-fini peut tout article utilisable pour la fabrication d'article fini en caoutchouc tel qu'un pneumatique.

Préférentiellement, l'article semi-fini pour pneumatique peut être choisi parmi les sous-couches, les gommes de liaison entre caoutchoucs de différentes natures ou de calandrage de renforts métalliques ou textiles, des gommes de flancs et des bandes de roulement. Plus préférentiellement, l'article semi-fini pour pneumatique est une bande de roulement. Les articles semi-finis sont obtenus par des méthodes bien connues de l'homme du métier.

Un autre objet de la présente invention concerne un pneumatique comprenant au moins une composition de caoutchouc conforme à l'invention et telle que décrite ci-dessus ou comprenant au moins un article semi-fini pour pneumatique tel que décrit ci-dessus. Les pneumatiques de la présente invention présentent des propriétés améliorées de résistance au roulement sans que l'adhérence sur sol mouillé ne soit pénalisée. Avantageusement, ils présentent également une adhérence sur sol enneigé améliorée. Les pneumatiques de l'invention peuvent notamment être destinés à équiper des véhicules à moteur de type tourisme, des SUV (« *Sports Utility Vehicles* »), des deux roues (notamment

motos), des avions, comme des véhicules industriels choisis parmi camionnettes, « Poids-lourd » - c'est-à-dire métro, bus, engins de transport routier (camions, tracteurs, remorques), des véhicules hors-la-route tels qu'engins agricoles ou de génie civil -, autres véhicules de transport ou de manutention. Les pneumatiques de l'invention sont obtenus par des méthodes bien connues de l'homme du métier.

## 3 - EXEMPLES

Les exemples qui suivent illustrent l'invention sans toutefois la limiter.

### 3.1 - Fabrication des compositions de caoutchouc :

On procède pour les essais qui suivent à la préparation des compositions de la manière suivante: on introduit dans un mélangeur interne, rempli à 70% et dont la température initiale de cuve est d'environ 50°C, les élastomères diéniques, la charge inorganique renforçante (silice), le noir de carbone, l'agent de couplage à tester puis, après une à deux minutes de malaxage, les divers autres ingrédients y compris la résine à tester à l'exception du système de vulcanisation. On conduit alors un travail thermomécanique (phase non-productive) en une étape (durée totale du malaxage égale à environ 5 min), jusqu'à atteindre une température maximale de « tombée » d'environ 165°C.

On récupère le mélange ainsi obtenu, on le refroidit puis on ajoute le système de vulcanisation (soufre et accélérateur) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques après cuisson.

### 3.2 - Essai A :

Cet essai a pour but de démontrer les propriétés de résistance au roulement améliorées d'une composition de caoutchouc conforme à l'invention comparée à des compositions de caoutchouc non conformes utilisant des résines plastifiantes autres que des résines hydrocarbonées composées majoritairement de monomères choisis dans le groupe constitué par le cyclopentadiène, le dicyclopentadiène, le méthylcyclopentadiène et les mélanges de ces monomères et utilisant un agent de couplage autre que le mercaptosilane bloqué de formule (I).

Dans la suite de la description, par soucis de simplification, les résines hydrocarbonées composées majoritairement de monomères choisis dans le groupe constitué par le cyclopentadiène, le dicyclopentadiène, le méthylcyclopentadiène et les mélanges de ces monomères seront appelées résines DCDP. L'agent de couplage, le mercaptosilane bloqué de formule (I) sera appelé agent de couplage mercaptosilane bloqué.

On compare 8 compositions de caoutchouc à base d'élastomère diénique renforcée par de la silice, ces compositions se différenciant les unes des autres essentiellement par les caractéristiques qui suivent :

- la composition CP1 est une composition de caoutchouc non conforme comprenant une résine coupe C5/ coupe C9 et un agent de couplage silane polysulfure ;
- la composition CP2 est une composition de caoutchouc non conforme comprenant une résine coupe C5/ coupe C9 et l'agent de couplage mercaptosilane bloqué ;
- la composition CP3 est une composition de caoutchouc non conforme comprenant une résine à base de terpènes (beta pinène) et un agent de couplage silane polysulfure ;
- la composition CP4 est une composition de caoutchouc non conforme comprenant une résine à base de terpènes (beta pinène) et l'agent de couplage mercaptosilane bloqué ;
- la composition CP5 est une composition de caoutchouc non conforme comprenant une résine aromatique à base courmarone-indène et un agent de couplage silane polysulfure ;
- la composition CP6 est une composition de caoutchouc non conforme comprenant une résine aromatique à base courmarone-indène et l'agent de couplage mercaptosilane bloqué ;
- la composition CP7 est une composition de caoutchouc non conforme comprenant une résine DCPD et un agent de couplage silane polysulfure,
- la composition CP8 est une composition de caoutchouc conforme comprenant une résine DCPD et l'agent de couplage mercaptosilane bloqué.

Le tableau I présente les formulations des compositions de caoutchouc CP1 à CP8. Le taux des différents ingrédients est exprimé en pce. Les quantités d'agent de couplage (3) et (4) sont ajustées afin que toutes les compositions comprennent le même taux molaire d'atome de silicium.

Tableau I

| | CP1 | CP2 | CP3 | CP4 | CP5 | CP6 | CP7 | CP8 |
|---|---|---|---|---|---|---|---|---|
| Elastomère (1) | 100 | 100 | 100 | 100 | 100 | 100 | 100 | 100 |
| Charge inorganique renforçante (2) | 130 | 130 | 130 | 130 | 130 | 130 | 130 | 130 |
| Agent de couplage (3) | 13 | (-) | 13 | (-) | 13 | (-) | 13 | (-) |
| Agent de couplage (4) | (-) | 17,5 | (-) | 17,5 | (-) | 17,5 | (-) | 17,5 |
| Résine 1 (5) | 88 | 88 | (-) | (-) | (-) | (-) | (-) | (-) |
| Résine 2 (5) | (-) | (-) | 88 | 88 | (-) | (-) | (-) | (-) |
| Résine 3 (5) | (-) | (-) | (-) | (-) | 88 | 88 | (-) | (-) |
| Résine 4 (5) | (-) | (-) | (-) | (-) | (-) | (-) | 88 | 88 |
| Noir de Carbone (6) | 4 | 4 | 4 | 4 | 4 | 4 | 4 | 4 |
| Antioxydant (7) | 6 | 6 | 6 | 6 | 6 | 6 | 6 | 6 |
| Cire anti-ozone | 2,85 | 2,85 | 2,85 | 2,85 | 2,85 | 2,85 | 2,85 | 2,85 |
| DPG (8) | 2,4 | 2,4 | 2,4 | 2,4 | 2,4 | 2,4 | 2,4 | 2,4 |
| Acide stéarique (9) | 3 | 3 | 3 | 3 | 3 | 3 | 3 | 3 |
| ZnO (10) | 0,9 | 0,9 | 0,9 | 0,9 | 0,9 | 0,9 | 0,9 | 0,9 |
| Accélérateur (11) | 2,3 | 2,3 | 2,3 | 2,3 | 2,3 | 2,3 | 2,3 | 2,3 |
| Soufre soluble | 0,7 | 0,7 | 0,7 | 0,7 | 0,7 | 0,7 | 0,7 | 0,7 |

(1) Copolymère de styrène-butadiène fonctionnel aminoalcoxysilane en milieu de chaîne ayant une température de transition vitreuse égale à - 88°C, la microstructure de ce copolymère est déterminée par la méthode NIR. Le taux de motifs 1,2 est de 12,7 % par rapport aux unités butadiène. Le taux massique de styrène est de 2,1 % ; ce copolymère est synthétisé selon le procédé décrit dans le document WO2017/060395;
(2) Silice « Zeosil 1165 MP » de la société Solvay type « HDS » ; sa surface spécifique BET est de 160 $m^2/g$ ;
(3) Agent de couplage silane polysulfure bis(triéthoxysilylpropyl)tétrasulfide commercialisé sous la référence « Si69 » de la société Evonik - Degussa ;
(4) Agent de couplage mercaptosilane bloqué S-(3-(triéthoxysilyl)propyl)octanethioate commercialisé sous la référence « NXT » par Momentive Inc,
(5) Résines 1 à 4 : voir tableau II ci-dessous ;
(6) Noir de carbone de grade ASTM N234 commercialisé par Cabot;
(7) N-(1,3-diméthylbutyl)-N'-phényl-p-phénylènediamine (Santoflex 6-PPD) de la société Flexsys et 2,2,4-triméthyl-1,2-dihydroquinoline (TMQ) ;
(8) Diphénylguanidine « Perkacit DPG » de la société Flexsys ;
(9) Stéarine « Pristerene 4931 » de la société Uniqema ;
(10) Oxyde de zinc de grade industriel - société Umicore ;
(11) N-cyclohexyl-2-benzothiazol-sulfénamide (« Santocure CBS » de la société Flexsys).

Les résines utilisées dans les compositions CP1 à CP8 sont présentées dans le tableau 2 ci-dessous.

Tableau II

| Résine | Nom commercial | Fabricant résine | Nature chimique | Point de Ramollissement (°C) | Tg (°C) | Mn g/mol | Mw g/mol | Ip | Taux de protons aromatiques (%) |
|---|---|---|---|---|---|---|---|---|---|
| **Résine 1** | « Escorez ECR-373 » | Exxon Mobil | Coupe C5/ Coupe C9 | 90 | 44 | 941 | 1575 | 1,67 | 12 |
| **Résine 2** | « Piccolyte S135 » | Pinova | Terpènes (beta-pinène) | 135 | 87 | 1245 | 2368 | 1,9 | 4 |
| **Résine 3** | « Neopolymer L-90 » | Nisseki | Aromatique coumarone-indène | 98 | 48 | 735 | 1164 | 1,72 | 38 |
| **Résine 4** | « PR-383 » | Exxon Mobil | DCDP | 100 | 51 | 490 | 805 | 1,65 | 10 |

Les résines ont été analysées avec les méthodes décrites au paragraphe 1 Méthodes de mesure utilisées

Le tableau III donne les propriétés après cuisson, environ 40 min à 150°C des compositions CP1 à CP8.

Tableau III

| | CP1 | CP2 | CP3 | CP4 | CP5 | CP6 | CP7 | CP8 |
|---|---|---|---|---|---|---|---|---|
| Tan $(\delta)_{max}$ à 23°C (base 100) | 100 | 88 | 156 | 134 | 140 | 120 | 101 | 71 |
| Tan$(\delta)_{-20°C}$ (base 100) | 100 | 107 | 36 | 45 | 57 | 74 | 94 | 127 |

L'examen du tableau III montre toutes les compositions comprenant un agent de couplage silane polysulfure (compositions CP3, CP5, CP7 non conformes à l'invention) ne permettent pas d'améliorer à la fois la résistance au roulement et l'adhérence sur sol mouillé par rapport à la composition témoin CP1, quelle que soit la résine plastifiante utilisée.

Lorsqu'on remplace l'agent de couplage silane polysulfure par un agent de couplage mercaptosilane bloqué (compositions CP2, CP4, CP6 et CP8), on observe que seules la composition CP2 non conforme à l'invention et la composition CP8 permettent à la fois une amélioration de la résistance au roulement et de l'adhérence sur sol mouillé par rapport à la composition témoin CP1.

On remarque également que seule la composition CP8 conforme à l'invention permet d'obtenir une amélioration significative à la fois de la résistance au roulement et de l'adhérence sur sol mouillé par rapport à la composition CP2 non conforme.

De plus, manière surprenante, on constate que la composition CP8 conforme à l'invention combinant la présence de l'agent de couplage mercaptosilane bloqué et de la résine DCPD présente une amélioration des performances résistance au roulement (amélioration de -29) et d'adhérence sur sol mouillé (amélioration de +27) supérieure à l'addition des effets de la résistance au roulement et de l'effet adhérence sur sol enneigé de la composition CP2 par rapport à la composition CP1 (résistance roulement :-12 et adhérence sur sol mouillé : +7) et de ceux de la composition CP7 par rapport à CP1 (résistance au roulement :+1 et adhérence sur sol mouillé : -6). On constate ainsi une véritable synergie sur l'effet du choix de l'agent de couplage mercaptosilane bloqué et de la résine DCDP au sein d'une même composition pour les deux propriétés précitées.

## Revendications

**1.** Composition de caoutchouc à base d'au moins:

- un élastomère diénique;
- une charge inorganique renforçante;
- un agent de couplage de la charge inorganique renforçante avec l'élastomère diénique, ledit agent de couplage est un mercaptosilane bloqué de formule générale (I)

$$(R^4O)_dR^3_{(3-d)}\text{-Si-Z-S-C(=O)-}R^5 \qquad \text{(I)}$$

dans laquelle :

- le radical $R^3$ est choisi parmi les alkyles, linéaires ou ramifiés, en C1-C18, les cycloalkyles en C3-C8 et les aryles en C6-C10 ;
- le radical $R^4$ est choisi parmi un atome d'hydrogène, les alkyles, linéaires ou ramifiés, en C1-C18, les cycloalkyles en C3-C8 ou les aryles en C6-C10;
- le radical $R^5$ est choisi parmi un atome d'hydrogène, les alkyles, linéaires ou ramifiés en C1-C18, les cycloalkyles en C3-C8, les aryles en C6-C10 et les alkoxyalkyles, linéaires ou ramifiés, en C2-C8 ;
- le symbole Z représente un groupe de liaison divalent comportant de 1 à 18 atomes de carbone ;
- d est un nombre entier égal 1, 2 ou 3 ;

- une résine hydrocarbonée composée majoritairement de monomères choisis dans le groupe constitué par le cyclopentadiène, le dicyclopentadiène, le méthylcyclopentadiène et les mélanges de ces derniers ; et
- un système de réticulation.

**2.** Composition de caoutchouc selon la revendication 1, dans laquelle le radical $R^3$ est un alkyle, linéaire ou ramifié,

en C1-C10 ; de préférence le radical $R^3$ est choisi parmi le méthyle, l'éthyle, le propyle et l'isobutyle.

**3.** Composition de caoutchouc selon la revendication 1 ou 2, dans laquelle le radical $R^4$ est choisi parmi l'atome d'hydrogène et les alkyles, linéaires ou ramifiés, en C1-C18.

**4.** Composition de caoutchouc selon l'une quelconque des revendications 1 à 3, dans laquelle le groupe Z est choisi dans le groupe constitué par un alkylène, linéaire ou ramifié en C1-C18, un cycloalkylène saturé en C3-C8, un arylène en C6-C12,

**5.** Composition de caoutchouc selon l'une quelconque des revendications 1 à 4, dans laquelle le radical $R^5$ est choisi parmi l'atome d'hydrogène et les alkyles linéaires ou ramifiés en C1-C18.

**6.** Composition de caoutchouc selon l'une quelconque des revendications 1 à 5, dans laquelle d est égal à 3.

**7.** Composition de caoutchouc selon l'une quelconque des revendications 1 à 6, dans laquelle la résine hydrocarbonée a une masse moléculaire moyenne en nombre Mn comprise dans un domaine allant de 200 à 2000 g/mol, de préférence de 200 à 600 g/mol.

**8.** Composition de caoutchouc selon l'une quelconque des revendications 1 à 7, dans laquelle le taux de résine hydrocarbonée est compris dans un domaine allant de 15 à 150 pce, de préférence de 25 à 120 pce, plus préférentiellement de 30 à 115 pce.

**9.** Composition de caoutchouc selon l'une quelconque des revendications 1 à 8, dans laquelle le taux de charge inorganique renforçante est compris dans un domaine allant de 5 à 200 pce, de préférence de 40 à 160 pce.

**10.** Composition de caoutchouc selon l'une quelconque des revendications 1 à 9, dans laquelle la charge inorganique renforçante comprend au moins une silice.

**11.** Composition de caoutchouc selon l'une quelconque des revendications 1 à 10, comprenant en outre du noir de carbone.

**12.** Composition de caoutchouc selon l'une quelconque des revendications 1 à 11, dans laquelle l'élastomère diénique est un élastomère fonctionnalisé.

**13.** Composition selon la revendication 12, dans laquelle l'élastomère diénique fonctionnalisé présente une température de transition vitreuse Tg inférieure ou égale à -40°C, de préférence comprise dans un domaine allant de -110°C à -40°C, plus préférentiellement comprise dans un domaine allant de -110°C à -60°C, plus préférentiellement encore comprise dans un domaine allant de -110°C à -80°C.

**14.** Article semi-fini pour pneumatique comprenant au moins une composition définie selon l'une quelconque des revendications 1 à 13.

**15.** Pneumatique comprenant au moins une composition définie selon l'une quelconque des revendications 1 à 13.

## Patentansprüche

**1.** Kautschukzusammensetzung auf der Basis von mindestens:

- einem Dienelastomer;
- einem verstärkenden anorganischen Füllstoff;
- einem Mittel zur Kupplung des verstärkenden anorganischen Füllstoffs mit dem Dienelastomer, wobei das Kupplungsmittel ein blockiertes Mercaptosilan der allgemeinen Formel (I) ist:

$$(R^4O)_dR^3_{(3-d)}\text{-Si-Z-S-C(=O)-}R^5 \qquad \text{(I)}$$

worin:

- der Rest $R^3$ aus geraden oder verzweigten C1-C18-Alkylen, C3-C8-Cycloalkylen und C6-C10-Arylen ausgewählt ist,
- der Rest $R^4$ aus einem Wasserstoffatom, geraden oder verzweigten C1-C18-Alkylen, C3-C8-Cycloalkylen oder C6-C10-Arylen ausgewählt ist,
- der Rest $R^5$ aus einem Wasserstoffatom, geraden oder verzweigten C1-C18-Alkylen, C3-C8-Cycloalkylen, C6-C10-Arylen und geraden oder verzweigten C2-C8-Alkoxyalkylen ausgewählt ist,
- das Symbol Z eine zweiwertige Verbindungsgruppe mit 1 bis 18 Kohlenstoffatomen darstellt und
- d eine ganze Zahl gleich 1, 2 oder 3 ist,

• einem Kohlenwasserstoffharz, das größtenteils aus Monomeren, ausgewählt aus der aus Cyclopentadien, Dicyclopentadien, Methylcyclopentadien und deren Gemischen bestehenden Gruppe, besteht; und
• einem Vernetzungssystem.

**2.** Kautschukzusammensetzung nach Anspruch 1, wobei der Rest $R^3$ ein gerades oder verzweigtes C1-C10-Alkyl ist, vorzugsweise der Rest $R^3$ aus Methyl, Ethyl, Propyl und Isobutyl ausgewählt ist.

**3.** Kautschukzusammensetzung nach Anspruch 1 oder 2, wobei der Rest $R^4$ aus einem Wasserstoffatom und geraden oder verzweigten C1-C18-Alkylen ausgewählt ist.

**4.** Kautschukzusammensetzung nach einem der Ansprüche 1 bis 3, wobei die Gruppe Z aus der aus einem geraden oder verzweigten C1-C18-Alkylen, einem gesättigten C3-C8-Cycloalkylen und einem C6-C12-Arylen bestehenden Gruppe ausgewählt ist.

**5.** Kautschukzusammensetzung nach einem der Ansprüche 1 bis 4, wobei der Rest $R^5$ aus einem Wasserstoffatom und geraden oder verzweigten C1-C18-Alkylen ausgewählt ist.

**6.** Kautschukzusammensetzung nach einem der Ansprüche 1 bis 5, wobei d gleich 3 ist.

**7.** Kautschukzusammensetzung nach einem der Ansprüche 1 bis 6, wobei das Kohlenwasserstoffharz eine zahlenmittlere Molekülmasse Mn in einem Bereich von 200 bis 2000 g/mol, vorzugsweise von 200 bis 600 g/mol aufweist.

**8.** Kautschukzusammensetzung nach einem der Ansprüche 1 bis 7, wobei der Anteil an Kohlenwasserstoffharz in einem Bereich von 15 bis 150 phr, vorzugsweise von 25 bis 120 phr, stärker bevorzugt von 30 bis 115 phr liegt.

**9.** Kautschukzusammensetzung nach einem der Ansprüche 1 bis 8, wobei der Anteil an verstärkendem anorganischem Füllstoff in einem Bereich von 5 bis 200 phr, vorzugsweise von 40 bis 160 phr liegt.

**10.** Kautschukzusammensetzung nach einem der Ansprüche 1 bis 9, wobei der verstärkende anorganische Füllstoff mindestens ein Siliziumoxid umfasst.

**11.** Kautschukzusammensetzung nach einem der Ansprüche 1 bis 10, die außerdem Ruß umfasst.

**12.** Kautschukzusammensetzung nach einem der Ansprüche 1 bis 11, wobei es sich bei dem Dienelastomer um ein funktionalisiertes Elastomer handelt.

**13.** Zusammensetzung nach Anspruch 12, wobei das funktionalisierte Dienelastomer eine Glasübergangstemperatur Tg von kleiner als oder gleich -40 °C, vorzugsweise in einem Bereich von -110 °C bis -40 °C, stärker bevorzugt in einem Bereich von -110 °C bis -60 °C, noch stärker bevorzugt in einem Bereich von -110 °C bis -80 °C aufweist.

**14.** Halbzeug für einen Reifen, umfassend mindestens eine Zusammensetzung nach einem der Ansprüche 1 bis 13.

**15.** Reifen, umfassend mindestens eine Zusammensetzung nach einem der Ansprüche 1 bis 13.

## Claims

**1.** Rubber composition based on at least:

- a diene elastomer;
- a reinforcing inorganic filler;
- an agent for coupling the reinforcing inorganic filler with the diene elastomer, said coupling agent being a blocked mercaptosilane of general formula (I):

$$(R^4O)_dR^3_{(3-d)}\text{-Si-Z-S-C(=O)-}R^5 \qquad (I)$$

in which:

- the radical $R^3$ is chosen from linear or branched $C_1$-$C_{18}$ alkyls, $C_3$-$C_8$ cycloalkyls and $C_6$-$C_{10}$ aryls;
- the radical $R^4$ is chosen from a hydrogen atom, linear or branched $C_1$-$C_{18}$ alkyls, $C_3$-$C_8$ cycloalkyls or $C_6$-$C_{10}$ aryls;
- the radical $R^5$ is chosen from a hydrogen atom, linear or branched $C_1$-$C_{18}$ alkyls, $C_3$-$C_8$ cycloalkyls, $C_6$-$C_{10}$ aryls and linear or branched $C_2$-$C_8$ alkoxyalkyls;
- the symbol Z represents a divalent bonding group containing from 1 to 18 carbon atoms;
- d is an integer equal to 1, 2 or 3;

- a hydrocarbon-based resin predominantly composed of monomers chosen from the group consisting of cyclopentadiene, dicyclopentadiene, methylcyclopentadiene and mixtures thereof, and
- a crosslinking system.

**2.** Rubber composition according to Claim 1, in which the radical $R^3$ is a linear or branched C1-C10 alkyl; preferably, the radical $R^3$ is chosen from methyl, ethyl, propyl and isobutyl.

**3.** Rubber composition according to Claim 1 or 2, in which the radical $R^4$ is chosen from a hydrogen atom and linear or branched C1-C18 alkyls.

**4.** Rubber composition according to any one of Claims 1 to 3, in which the group Z is chosen from the group consisting of a linear or branched C1-C18 alkylene, a saturated C3-C8 cycloalkylene and a C6-C12 arylene.

**5.** Rubber composition according to any one of Claims 1 to 4, in which $R^5$ is chosen from a hydrogen atom and linear or branched C1-C18 alkyls.

**6.** Rubber composition according to any one of Claims 1 to 5, in which d is equal to 3.

**7.** Rubber composition according to any one of Claims 1 to 6, in which the hydrocarbon-based resin has a number-average molecular mass Mn that is within a range extending from 200 to 2000 g/mol, preferably from 200 to 600 g/mol.

**8.** Rubber composition according to any one of Claims 1 to 7, in which the content of hydrocarbon-based resin is within a range extending from 15 to 150 phr, preferably from 25 to 120 phr, more preferentially from 30 to 115 phr.

**9.** Rubber composition according to any one of Claims 1 to 8, in which the content of reinforcing inorganic filler is within a range extending from 5 to 200 phr, preferably from 40 to 160 phr.

**10.** Rubber composition according to any one of Claims 1 to 9, in which the reinforcing inorganic filler comprises at least one silica.

**11.** Rubber composition according to any one of Claims 1 to 10, also comprising carbon black.

**12.** Rubber composition according to any one of Claims 1 to 11, in which the diene elastomer is a functionalized elastomer.

**13.** Composition according to Claim 12, in which the functionalized diene elastomer has a glass transition temperature Tg of less than or equal to -40°C, preferably within a range extending from -110°C to -40°C, more preferentially within a range extending from -110°C to -60°C, even more preferentially within a range extending from -110°C to -80°C.

**14.** Semi-finished article for a tyre, comprising at least one composition defined according to any one of Claims 1 to 13.

**15.** Tyre comprising at least one composition defined according to any one of Claims 1 to 13.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20020115767 A1
- WO 0248256 A
- US 7122590 B
- FR 2740778
- US 6013718 A
- WO 2008141702 A
- FR 2765882
- WO 0192402 A
- WO 200409686 A
- EP 1127909 A
- US 6503973 B
- WO 2009000750 A
- WO 2009000752 A
- EP 0778311 A
- WO 03016387 A
- WO 2006069792 A
- WO 2006069793 A
- WO 2008003434 A
- WO 2008003435 A
- WO 9736724 A
- WO 9916600 A
- WO 9909036 A
- WO 2010072682 A
- WO 2010072683 A
- WO 203087693 A
- WO 03002648 A
- US 2005016651 A
- WO 03002649 A
- US 2005016650 A
- WO 02083782 A
- US 2004132880 A
- EP 0501227 A
- EP 0735088 A
- EP 0810258 A
- WO 0005300 A
- WO 0005301 A
- WO 2017060395 A


### Littérature non-brevet citée dans la description


- **BRUNAUER-EMMETT-TELLER.** *The Journal of the American Chemical Society,* Février 1938, vol. 60, 309
- **VILMIN, F. ; DUSSAP, C ; COSTE, N.** *Applied Spectroscopy,* 2006, vol. 60, 619-29
- **R. MILDENBERG ; M. ZANDER ; G. COLLIN.** Hydrocarbon Resins. VCH, 1997